# EUROPEAN PATENT APPLICATION

(11) **EP 3 822 425 A1**
(43) Date of publication of application: **19.05.2021**
(21) Application number: 20206403.6
(22) Date of filing: 09.11.2020
(51) Int. Cl.: E04F 11/18, F16B 7/04, F16C 11/00

(54) **ARTICULATED JOINT FOR BALUSTRADES, RAILINGS AND SIMILAR**

(30) Priority: 13.11.2019 IT 201900021120
(71) Applicant: Fondazione di' Persona, 47122 Forli' (IT)
(72) Inventor: AMADUCCI, FABRIZIO, 47122 Forlì (IT)
(74) Representative: Minghetti, Mauro

(57) **Abstract**

An articulated joint (1) for balustrades, railings and similar, comprising a first member (2) and a second member (3) mutually associated by connecting means (4), configured to allow the inclination of the first member (2) and of the second member (3) relative to each other according to the desired position. The connecting means (4) define a first axis (A), which crosses the first member (2), and a second axis (B), which crosses the second member (3); the first axis (A) and the second axis (B) are always incident in the same point (C), in any configuration assumed by the joint (1). The first member (2) and the second member (3) respectively comprise a first surface (5) and a second surface (6), which are in mutual contact in any configuration assumed by the joint (1). The connecting means (4) comprise an articulated pin (13) comprising, in turn, a first element (14) and a second element (15), mutually articulated in an articulation axis (D) passing through the point (C), and also first screw means (18) and second screw means (19), configured to constrain, respectively, the first element (14) with respect to the first member (2), and the second element (15) with respect to the second member (3).

## Description

### TECHNICAL FIELD OF THE INVENTION

The present invention concerns an articulated joint for balustrades, railings and similar.

### BACKGROUND ART

Some types of railings, balustrades and other protective structures against the fall of stepped staircases are normally made using vertical uprights mounted on the floor, to the top of which handrails are fixed.

The most common balustrades and railings are entirely made with metal components, for example in stainless steel or other materials with suitable characteristics both from an aesthetic and functional point of view.

As is known, one of the main technical problems that distinguish the installation of balustrades or stair railings is the different slope of each of the stairs, to which the inclination of the handrail must be adjusted with respect to the vertical uprights in order to obtain a correct assembly.

If the assembly of the parts is done in the workshop and not on site, using permanent connections between uprights and handrails (such as welding, in the case of metal components) evidently, at the time of installation, problems of unevenness or inaccurate alignments may arise, which force the installer to modify the parts on site.

To overcome these problems, balustrades have been developed in which the connection between the uprights and the handrail is of the selectively rotating type, to obtain different inclinations according to the slope of each staircase.

In fact, in some known solutions, the connection between the handrail and the end upright of a balustrade or railing - that is the upright at the beginning or end of the same - is made by means of an articulated joint, which can be selectively locked in the desired position.

More in detail, this articulated joint comprises a first member, connectable to the top of the upright, and a second member, connectable to one end of the handrail. The aforementioned first member and second member are associated by means of connecting means that allow tilting one with respect to the other according to the desired position.

The first member and the second member comprise, respectively, a first axis and a second axis, which are always incident in the same point, in any configuration assumed by the joint.

More in detail, the first member and the second member respectively comprise a first surface and a second surface, which are in mutual contact in the assembled configuration of the joint, that is, which lie on the same plane.

The first surface of the first member lies on a plane with which the first axis forms a certain angle; this angle can be any, but preferably it is 45°.

Similarly, the second surface of the second member lies on a plane with which the second axis forms the same angle.

This conformation of the first member and of the second member allows to obtain a relative rotation in space, of the second member with respect to the first member, or vice versa, around an axis of rotation that is orthogonal to the plane on which the first surface of the first member and the second surface of the second member lie. In practice, therefore, in the specific case in which the aforementioned angle is 45°, it is possible to rotate the first member with respect to the second member, or vice versa, by any desired angle between 90° and 180°, so as to adapt the articulated joint with different installation configurations.

The mechanism that allows to obtain the relative rotation of the two members of the joint comprises, in known solutions, a pin having a first end housed in a first seat provided in the aforementioned first surface of the first member, and a second end housed in a second seat provided in the second surface of the second member. The assembly of the joint, as well as the locking of the first member with respect to the second member in the desired position, is obtained through two set screws, or screws, inserted into respective threaded holes of the first member and of the second member, which intercept the first seat and the second seat.

In fact, the ends of the aforesaid two set screws, once these have been inserted into the respective threaded holes, engage in respective grooves provided in the lateral surface of the pin, thus realizing the necessary friction conditions to prevent the reciprocal movement of the first member with respect to the second member.

This solution, and others similar to it, while being simple from a constructive point of view and therefore being cheap, is not entirely satisfactory from some points of view.

Firstly, the set screws or locking screws have their respective ends, or heads, which, even after installation, are distinctly visible from the outside, and this creates an aesthetically unpleasant effect, especially considering that this kind of objects usually has a very simple, regular and clean external surface (normally, in fact, joints of this type are made of metallic material, such as stainless steel). Furthermore, the presence of the threaded holes, in which the set screws or screws are inserted in order to be accessible from the outside, causes the accumulation of dirt inside them, and this further worsens the appearance of the object over time. The fact that the set screws, or screws, are directly accessible from the outside, also entails the risk that they may even accidentally unscrew, making the connection between the first member and the second member of the joint unstable; the dimensions of the set screws, or screws, which are relatively small mainly for aesthetic reasons, do not favor stable fixing.

Last but not least, the first member and the second member of the joint, in the case in which they are made of a metallic material (for example, stainless steel), are quite heavy, as they are usually produced starting from a solid metal semi-finished product, and this makes their transport and installation difficult.

### OBJECTS OF THE INVENTION

The technical aim of the present invention is therefore to improve the state of the art.

Within this technical aim, it is an object of the present invention to overcome the previously mentioned drawbacks.

Another object of the present invention is to provide an articulated joint for balustrades, railings, and the like which has a cleaner and more regular external surface than known solutions.

Still another object of the present invention is to provide an articulated joint for balustrades, railings and the like in which the installation position of the first member with respect to the second member can be locked, and therefore maintained, in a stable and safe manner, without the risk of accidental release. Another object of the present invention is to make available an articulated joint for balustrades, railings and the like having a lower weight than known solutions.

This aim and these objects are achieved by the articulated joint for balustrades, railings and similar according to the attached claim 1.

The articulated joint according to the invention comprises a first member, connectable to the top of an upright, and a second member connectable to the end of a handrail.

The first member and the second member are associated by connecting means that allows tilting one with respect to the other according to the desired position.

The aforesaid connecting means define, respectively, a first axis and a second axis, which are always incident in the same point, in any configuration assumed by the joint.

The first member and the second member comprise, respectively, a first surface and a second surface, which are in mutual contact in the assembled configuration of the joint, i.e. they lie on the same plane.

According to an aspect of the invention, the aforesaid connecting means comprise an articulated pin, comprising in turn a first element and a second element, mutually articulated in an articulation axis which passes through the aforementioned point of incidence of the first axis and of the second axis.

The aforesaid connecting means further comprise first screw means and second screw means configured to respectively constrain, in an axially locked but rotatably free way, the first element of the articulated pin with respect to the first member, and the second element of the articulated pin with respect to the second member.

The dependent claims refer to preferred and advantageous embodiments of the invention.

### BRIEF DESCRIPTION OF THE DRAWINGS

The features of the invention will be better understood by every skilled person from the following description and the attached drawings tables, given as a non-limiting example, in which:
Figure 1 is an axonometric view of the articulated joint according to the present invention, in a determined assembly configuration;
Figure 2 is an exploded axonometric view of the articulated joint;
Figure 3 is a detailed axonometric view of the articulated pin of the connecting means;
Figure 4 is a partially sectioned side view of the joint according to the invention;
Figure 5 is a side view of the joint according to the invention in two different assembly configurations;
Figure 6 is a bottom view of the first member, or of the second member, of the joint according to the invention;
Figure 7 is an axonometric view of the first member, or the second member, of the joint;
Figure 8 is a sectional side view of the first member, or the second member, of the joint;
Figure 9 is a front view of the first member, or the second member, of the joint;
Figure 10 is a side view of the first terminal core, or of the second terminal core, which can be associated with the joint;
Figure 11 is a sectional side view of the first terminal core, or of the second terminal core, which can be associated with the joint;
Figure 12 is a top view of the first terminal core, or of the second terminal core, of the joint;
Figure 13 is a side view of the first element of the articulated pin;
Figure 14 is a front view of the first element of the articulated pin;
Figure 15 is a top view of the first element of the articulated pin;
Figure 16 is an axonometric view of the first element of the articulated pin;
Figure 17 is a side view of the second element of the articulated pin;
Figure 18 is a front view of the second element of the articulated pin;
Figure 19 is a top view of the second element of the articulated pin;
Figure 20 is an axonometric view of the second element of the articulated pin.

### DETAILED DESCRIPTION OF THE INVENTION

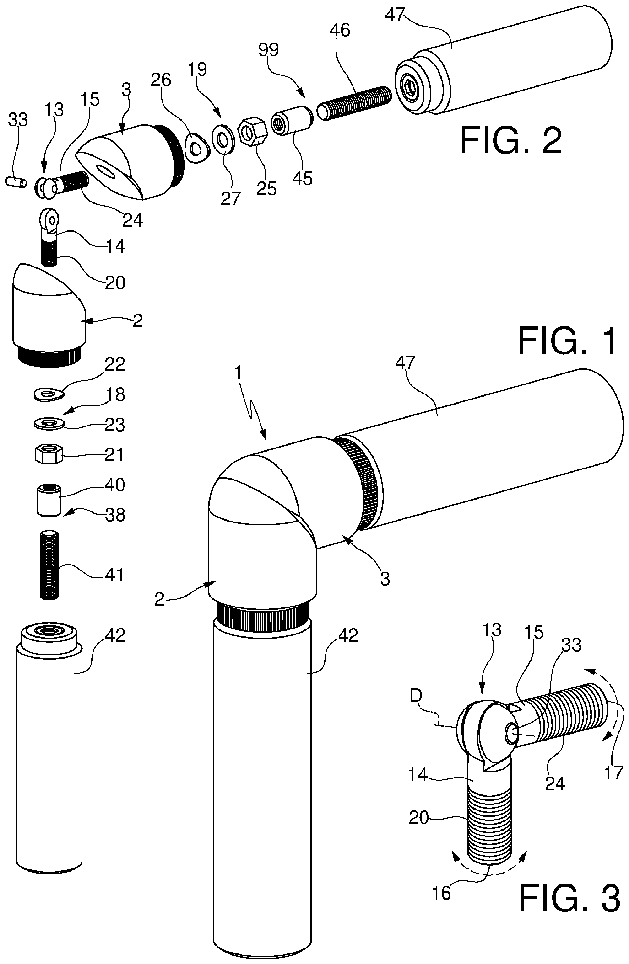

With reference to the attached Figure 1, the reference numeral 1 generally indicates an articulated joint for balustrades, railings and similar, according to the present invention.

The articulated joint 1 according to the present invention can be used in the installation of railings, balustrades, parapets, or any other protective structure associated with stairs, mezzanines, terraces, balconies, or the like, without any limitation.

The articulated joint 1 comprises a first member 2.

The first member 2 can be connected to the top of an upright (not shown in the figures) of a railing, balustrade, or the like, or to another similar element.

The articulated joint 1 also comprises a second member 3.

The second member 3 can be connected to the end of a handrail (not shown in the figures) of a railing, balustrade or similar, or to another similar element.

The first member 2 and the second member 3 are mutually associated by means of connecting means 4.

The connecting means 4 are configured to allow the inclination of the first member 2 and of the second member 3 with respect to each other according to the desired position, to adapt the articulated joint 1 to different installation configurations, as will become clearer later.

More in detail, the connecting means 4, with variable configuration, allow the joint 1 to be adapted, for example, to different applications in which the two elements connected by the joint (typically upright and handrail, but not exclusively) are differently inclined relative to each other (for example, at an angle between 90° and 180°).

In the embodiment of the invention illustrated in the attached figures, the first member 2 and the second member 3 are constructively completely identical.

This entails obvious advantages in terms of production and warehouse costs. Consequently, with reference to installation in a railing or balustrade, joint 1 is completely reversible.

However, in the rest of this description, for reasons of generality and greater clarity, the first member 2 and the second member 3 are distinct from each other. The connecting means 4 define a first axis A, which crosses the first member 2, and a second axis B, which crosses the second member 3.

The first axis A and the second axis B are always incident in the same point C, in any configuration assumed by joint 1.

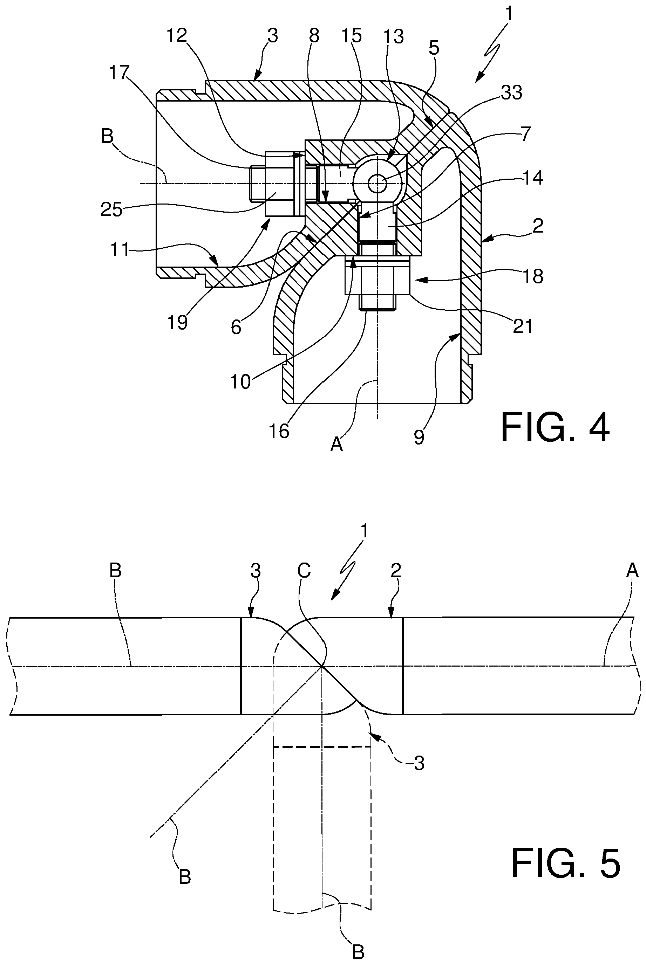

The first member 2 and the second member 3 comprise, respectively, a first surface 5 and a second surface 6, which are in mutual contact in the assembled configuration of the joint 1 (Figures 4 and 5).

In other words, in any configuration assumed by the joint 1, the first surface 5 and the second surface 6 always lie on the same plane.

More in detail, the first surface 5 of the first member 2 lies on a plane with which the first axis A forms a first angle α.

Likewise, the second surface 6 of the second member 3 lies on a plane with which the second axis B forms a second angle β.

The first angle α and the second angle β could be any.

In an embodiment of the invention of particular practical interest, shown in the attached figures, the first angle α and the second angle β are identical, and are both 45°.

This means that - as shown in Figure 5 - the first member 2 and the second member 3 can be inclined, with respect to each other, by any angle between 90° and 180°, including extreme values.

The first member 2 comprises a first through hole 7.

The symmetry axis of the first through hole 7 coincides with the aforementioned first axis A of the first member 2.

Likewise, the second member 3 comprises a second through hole 8.

The axis of symmetry of the second through hole 8 coincides with the aforementioned second axis B of the second member 3.

According to another aspect of the invention, the first member 2 is internally hollow, and it comprises a first cavity 9.

The first cavity 9 is open on the side opposite to that in which the first surface 5 is located.

At the opposite side with respect to the first surface 5, the first member 2 defines a first abutment surface 10.

The first abutment surface 10 is therefore located inside the first cavity 9.

The first abutment surface 10 is perpendicular to the symmetry axis of the first through hole 7, and it circumscribes its opening towards the inside of the first cavity 9.

Likewise, the second member 3 is internally hollow, and it comprises a second cavity 11.

The second cavity 11 is open on the side opposite to that in which the second surface 6 is located.

At the opposite side with respect to the second surface 6, the second member 3 defines a second abutment surface 12.

The second abutment surface 12 is, therefore, located inside the second cavity 11. The second abutment surface 12 is perpendicular to the symmetry axis of the second through hole 8, and it circumscribes its opening towards the inside of the second cavity 11.

According to a further aspect of the invention, the aforementioned connecting means 4 comprise an articulated pin 13.

The articulated pin 13 comprises, in turn, a first element 14 and a second element 15.

The first element 14 and the second element 15 are mutually articulated in an articulation axis D.

The first element 14 and the second element 15 comprise, respectively, a first end 16 and a second end 17.

The first element 14 is inserted into the first through hole 7 of the first member 2. More in detail, the first element 14 is completely inserted into the first through hole 7, so that its first end 16 protrudes into the first cavity 9.

The second element 15 of the articulated pin 13 is inserted into the second through hole 8 of the second member 3.

More specifically, the second element 15 is completely inserted into the second through hole 8, so that its second end 17 protrudes into the second cavity 11. More specifically, the second element 15 is completely inserted into the second through hole 8, so that its second end 17 protrudes into the second cavity 11.

The connecting means 4 further comprise first screw means 18 and second screw means 19, respectively configured to constrain the articulated pin 13, with respect to the first member 2 and to the second member 3, in the desired position.

In particular, the first screw means 18 and the second screw means 19 are configured to constrain, respectively, the first element 14 of the articulated pin 13 with respect to the first member 2, and the second element 15 of the articulated pin 13 with respect to the second member 3.

As better described below (see Figure 4), the first screw means 18 contact the first abutment surface 10 of the first member 2; likewise, the second screw means 19 contact the second abutment surface 12 of the second member 3.

The first screw means 18 comprise a first thread 20 of the first end 16 of the first element 14.

Furthermore, the first screw means 18 comprise a first nut 21, intended to be screwed along the aforementioned first thread 20.

The first nut 21 can be of the self-locking type.

In particular, to obtain the locking of the articulated joint 1 in the desired configuration, the first nut 21 is screwed along the first thread 20, until it contacts the first abutment surface 10.

The first screw means 18 may further comprise a first elastic washer 22, interposed between the first nut 21 and the first abutment surface 10.

The first elastic washer 22 can have an anti-unscrewing function, and/or possibly a compensating function of small clearances or displacements.

The first screw means 18 can also comprise a first flat washer 23, interposed between the first elastic washer 22 and the first nut 21.

In an embodiment of the invention, the first elastic washer 22 and/or the first flat washer 23 could be replaced by technically equivalent means.

Likewise, the second screw means 19 comprise a second thread 24 of the second end 17 of the second element 15.

The second screw means 19 further comprise a second nut 25, intended to be screwed along the aforementioned second thread 24.

The second nut 25 can be of the self-locking type.

In particular, to obtain the locking of the articulated joint 1 in the desired configuration, the second nut 25 is screwed along the second thread 24, until it contacts the second abutment surface 12.

The second screw means 19 may further comprise a second elastic washer 26, interposed between the second nut 25 and the second abutment surface 12.

The second elastic washer 26 can have an anti-unscrewing function, and/or a compensating function of small clearances or displacements.

The second screw means 19 may also comprise a second flat washer 27, interposed between the second elastic washer 26 and the second nut 25.

In an embodiment of the invention, the second elastic washer 26 and/or the second flat washer 27 could be replaced by technically equivalent means.

The first element 14 and the second element 15 of the articulated pin 13 can be configured, at the articulation axis D, in any suitable way to obtain the joint between them.

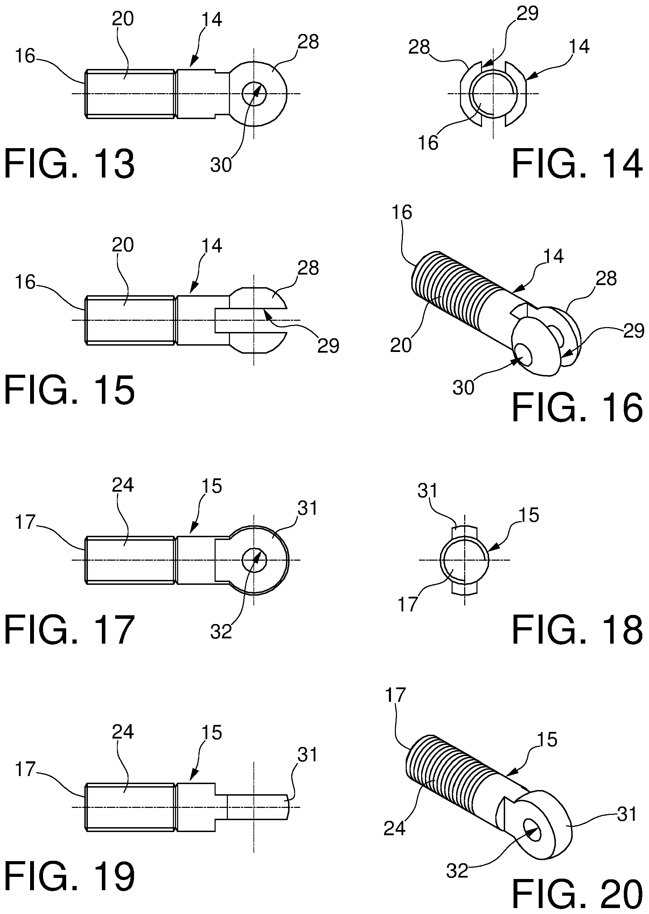

More in detail, in the embodiment shown in the figures, the first element 14 (Figures 13-16) comprises a first head 28, substantially fork-shaped, which defines a compartment 29 between two prongs.

The compartment 29 is crossed by a first portion 30 of a joint hole. Correspondingly, the second element 15 (Figures 17-20) includes a second head 31, shaped to engage in the compartment 29 of the first head 28, that is, between the two prongs of the latter.

The second head 31 is crossed by a second portion 32 of a joint hole.

The articulated pin 13 also comprises a pivot pin 33.

The pivot pin 33 is inserted in the first portion 30 and in the second portion 32 of the joint hole, when the second head 31 is engaged in the recess 29 of the first head 28.

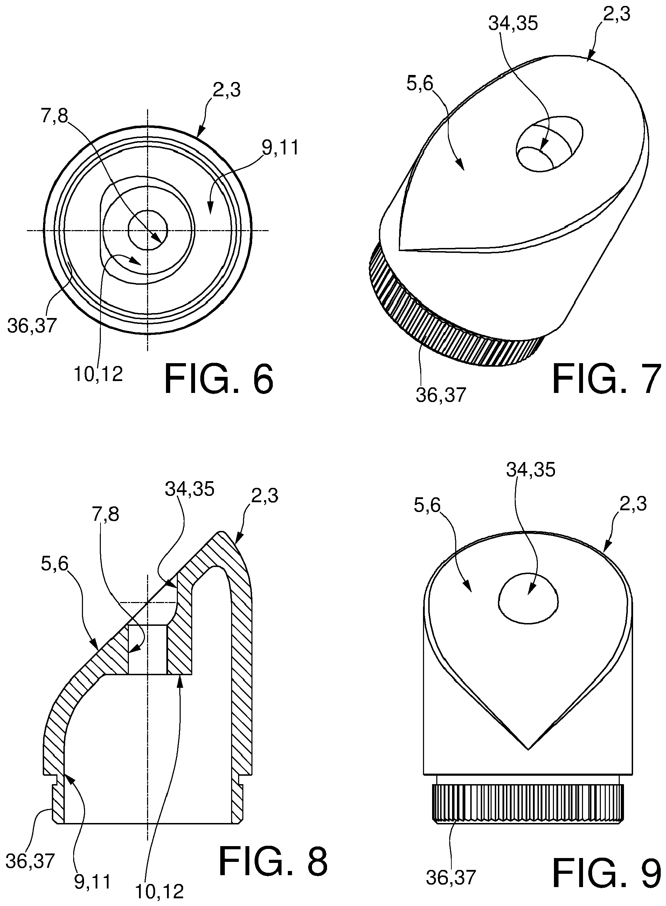

The first member 2 comprises a first seat 34 (see Figures 7,8).

The first seat 34 involves the first surface 5, at the first through hole 7.

In practice, the first seat 34 houses the first head 28 of the first element 14. Likewise, the second member 3 comprises a second seat 35.

The second seat 35 affects the second surface 6, at the second through hole 8.

The second seat 35 houses the second head 31 of the second element 15.

Thanks to the presence of the first seat 34 and of the second seat 35, which are therefore, essentially, recessed seats, the first surface 5 of the first member 2 and the second surface 6 of the second member 3 match perfectly.

The first member 2 can comprise a first terminal edge 36, which circumscribes the opening of the first cavity 9.

Likewise, the second member 3 can comprise a second edge 37, which circumscribes the second cavity 11.

To connect the joint 1, according to the present invention, to the upright and handrail of a railing, balustrade, or the like, it is possible to use, for example, threaded connecting members, particularly first threaded connecting members 38 and second threaded connecting members 39 (Figure 2).

In fact, the first thread 20 of the first element 14 and the second thread 24 of the second element 15 can be effectively used to obtain the connection, respectively, to the upright and to the handrail of the railing, balustrade or the like.

More in detail, in the embodiment of the invention shown in the figures, the aforementioned first threaded connecting members 38 comprise a first bush 40, internally threaded.

The first bushing 40 is configured to be screwed along the first thread 20 of the first element 14.

Furthermore, the aforementioned first threaded connecting members 38 comprise a first stud bolt 41.

The first stud bolt 41 is configured to be screwed inside the first bush 40.

The first stud bolt 41, in turn, can be coupled directly to a threaded hole provided in the upright of the railing, balustrade, or the like.

Alternatively, as shown in Figure 2 itself, in a version of the invention the first stud bolt 41 can be connected to a first terminal core 42, which can be inserted, in turn, in a cavity provided in the handrail.

In many railings, balustrades, or the like, the handrail consists of a metal tubular profile, which therefore has, for its conformation, a cavity in which the first terminal core 42 can be inserted.

In turn, the first terminal core 42 comprises a first threaded hole 43, in which the first stud bolt 41 is engageable.

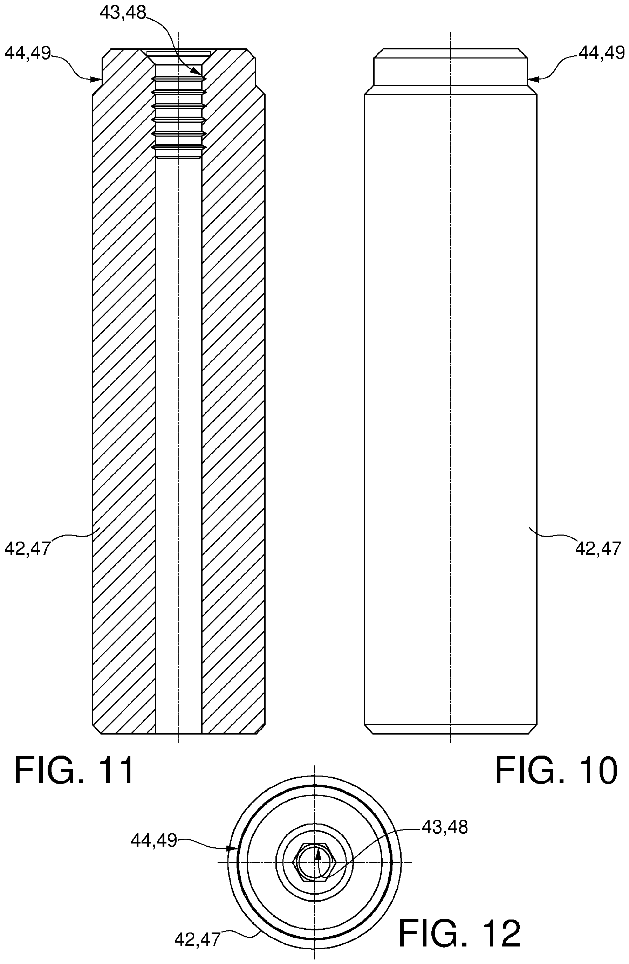

The first terminal core 42 can be made for example of wood, or other light and easily workable material (Figures 10-12).

The first terminal core 42 comprises a first shoulder 44, which circumscribes the first threaded hole 43.

When the first stud bolt 41 is fully engaged in the first threaded hole 43, the first edge 36 of the first member 2 engages in the first shoulder 44, thus achieving a precise coupling between the two parts.

At the first edge 36, the first member 2 can also include a machined surface suitable for increasing the friction with the internal surface of the handrail, to make the coupling between the two parts more solid (Figure 5).

At the first edge 36 of the first member 2, an adhesive can also be applied to couple to the internal surface of the handrail.

Likewise, in the embodiment of the invention shown in the figures, the aforementioned second threaded connecting members 39 comprise a second bush 45, internally threaded.

The second bush 45 is configured to be screwed along the second thread 24 of the second element 15.

Furthermore, the aforesaid second threaded connecting members 39 comprise a second stud bolt 46.

The second stud bolt 46 is configured to be screwed inside the second bush 45. The second stud bolt 46, in turn, can be directly coupled to a threaded hole provided in the handrail C of the railing, balustrade, or the like.

Alternatively, as shown in Figure 2 itself, in a version of the invention the second stud bolt 46 can be connected to a second terminal core 47, which can be inserted, in turn, into a cavity provided in the handrail C.

The second terminal core 47 can be identical to the first terminal core 42.

In many railings, balustrades, or the like, the handrail also consists of a metal tubular profile, which therefore has, for its conformation, a cavity in which the second terminal core 47 can be inserted.

In turn, the second terminal core 47 comprises a second threaded hole 48, in which the second stud bolt 46 is engageable.

The second terminal core 47 can also be made, for example, of wood or other light and easily workable material (Figures 10-12).

The second terminal core 47 comprises a second shoulder 49, which circumscribes the second threaded hole 48.

When the second stud bolt 46 is completely engaged in the second threaded hole 48, the second edge 37 of the second member 3 engages in the second shoulder 49, thus achieving a precise coupling between the two parts.

At the second edge 37, the second member 3 can also include a machined surface suitable for increasing the friction with the internal surface of the handrail C, to make the coupling between the two parts more solid (Figure 5).

At the second edge 37 of the second member 3, a gasket (for example an o-ring) configured to couple to the internal surface of the handrail C can also be mounted. The way of using the articulated joint 1 according to the invention is, in the light of what is described, completely simple and intuitive.

In fact, in order to obtain the desired configuration of the joint 1, i.e. a certain inclination of the first member 2 with respect to the second member 3 (see, in particular, Figure 4 for a better understanding), the first screw means 18 and the second means screws 19 are temporarily loosened, just enough to allow the detachment of the first surface 5 from the second surface 6, so that the latter can be manually rotated with respect to each other, without however that the second member 3 is released from the first member 2.

In the rotation of the first member 2 with respect to the second member 3, to obtain the desired configuration, the first element 14 and the second element 15 of the articulated pin 13 can freely rotate, respectively, inside the first through hole 7 and second through hole 8.

As shown in Figure 5, infinite installation configurations can be obtained, in which the first axis A and the second axis B form, between them, an angle between 90° and 180°, including extreme values.

Once the desired configuration of the joint 1 has been obtained, the first screw means 18 and the second screw means 19 are both tightened, so as to bring the first elastic washer 22 into contact with the first abutment surface 10, and the second elastic washer 26 in contact with the second abutment surface 12.

When tightening is completed, the first surface 5 of the first member 2 and the second surface 6 of the second member 3 are in mutual contact; the clamping force of the screw means 18, 19 allows to obtain the necessary friction to prevent the two surfaces 5,6 from rotating relative to each other.

At this point, the first terminal core 42 and the second terminal core 47 can also be connected to the joint 1, by means of the first threaded connecting members 38 and the second threaded connecting members 39, respectively, if necessary.

When assembly is complete, the connecting means 4 are therefore completely hidden from view, and they are not accessible from the outside.

It has thus been seen that the invention achieves the intended aims.

The articulated joint 1 according to the present invention has a clean and regular external surface, and therefore improved, from the aesthetic and functional point of view, with respect to known solutions.

Moreover, thanks to the fact that the connecting means 4, once assembled, are completely hidden, the desired installation position can be maintained in a more stable and safe way, without the risk of accidental release.

It is also pointed out that the articulated joint 1 according to the present invention is decidedly lighter than known solutions, particularly thanks to the fact that the first member 2 and the second member 3 are internally hollow, to house the connecting means 4.

The surface finish of the first member 2 and of the second member 3 is more responsive to that of the upright and of the handrail, since, being made by casting, they must necessarily be worked externally by means of a satin finishing process. The present invention has been described according to preferred embodiments, but equivalent variants can be conceived without departing from the scope of protection offered by the following claims.

## Claims

1. Articulated joint (1) for balustrades, railings and similar, comprising a first member (2) and a second member (3) mutually associated by connecting means (4), configured to allow the inclination of said first member (2) and of said second member (3) relative to each other according to the desired position, said connecting means (4) defining a first axis (A), which crosses said first member (2), and a second axis (B), which crosses said second member (3), said first axis (A) and second axis (B) being always incident in the same point (C) in any configuration assumed by the joint (1), said first member (2) and second member (3) comprising, respectively, a first surface (5) and a second surface (6) which are in mutual contact in any configuration assumed by the joint (1), said connection means (4) comprising an articulated pin (13) comprising, in turn, a first element (14) and a second element (15) mutually articulated in an articulation axis (D) passing through said point (C), and first screw means (18) and second screw means (19) configured to constrain, respectively, said first element (14) with respect to said first member (2) and said second element (15) with respect to said second member (3), wherein said first member (2) comprises a first through hole (7), whose axis of symmetry coincides with said first axis (A), in which said first element (14) of said articulated pin (13) is inserted, and in which said second member (3) comprises a second through hole (8), whose axis of symmetry coincides with said second axis (B), in which said second element (15) of said articulated pin (13) is inserted, in which said first member (2) and second member (3) are internally hollow and comprise, respectively, a first cavity (9) and a second cavity (11), said first cavity (9) being open on the side opposite to that in which said first surface is located (5), said second cavity (11) being open on the side opposite to that in which said second surface (6) is located, in which said first member (2) defines, on the opposite side with respect to said first surface (5), a first abutment surface (10) for said first screw means (18), and in which said second member (3) defines, on the side opposite to said second surface (6), a second abutment surface (12) for said second screw means (19), **characterized in that** said first abutment surface (10) is located inside said first cavity (9), is perpendicular to the symmetry axis of said first through hole (7) and circumscribes its opening towards the inside of said first cavity (9), and in which said second abutment surface (12) is located inside said second cavity (11), is perpendicular to the axis of symmetry of said second through hole (8) and circumscribes its opening towards the inside of said second cavity (11).

2. Joint (1) according to claim 1, wherein said first surface (5) of said first member (2) lies on a plane with which said first axis (A) forms a first angle (α), and in which said second surface (6) of said second member (3) lies on a plane with which said second axis (B) forms a second angle (β).

3. Joint (1) according to claim 2, wherein said first angle (α) and said second angle (β) are identical and are both 45°.

4. Joint (1) according to claim 1, wherein said first element (14) and second element (15) comprise, respectively, a first end (16) and a second end (17), and wherein said first element (14) is completely inserted in said first through hole (7) so that said first end (16) protrudes in said first cavity (9), and in which said second element (15) is completely inserted in said second through hole (8) so that said second end (17) protrudes into said second cavity (11).

5. Joint (1) according to claim 4, wherein said first screw means (18) comprise a first thread (20) of said first end (16) of said first element (14), and a first nut (21), screwed along said first thread (20) until it contacts said first abutment surface (10).

6. Joint (1) according to claim 5, wherein said first screw means (18) comprise a first elastic washer (22), interposed between said first nut (21) and said first abutment surface (10), and a first flat washer (23), interposed between said first elastic washer (22) and said first nut (21).

7. Joint (1) according to claim 4, wherein said second screw means (19) comprise a second thread (24) of said second end (17) of said second element (15), and a second nut (25), screwed along said second thread (24) until it contacts said second abutment surface (12).

8. Joint (1) according to claim 7, wherein said second screw means (19) comprise a second elastic washer (26), interposed between said second nut (25) and said second abutment surface (12), and a second flat washer (27) interposed between said second elastic washer (26) and said second nut (25).

9. Joint (1) according to one of the preceding claims, wherein said first element (14) of said articulated pin (13) comprises a first head (28), substantially fork-shaped, which defines a compartment (29) between two prongs, said compartment (29) being crossed by a first portion (30) of a joint hole.

10. Joint (1) according to claim 9, wherein said second element (15) comprises a second head (31), shaped so as to engage in said compartment (29) of said first head (28), said second head (31) being crossed by a second portion (32) of a joint hole.

11. Joint (1) according to claim 10, wherein said articulated pin (13) comprises a pivot pin (33) inserted in said first portion (30) and in said second portion (32) of the joint hole, when said second head (31) is engaged in said compartment (29) of said first head (28).

12. Joint (1) according to claim 10 or 11, wherein said first member (2) comprises a first seat (34) which affects said first surface (5), at said first through hole (7), and in wherein said second member (3) comprises a second seat (35) which affects said second surface (6), at said second through hole (8), said first seat (34) housing said first head (28), said second seat (35) housing said second head (31), so that said first surface (5) and said second surface (6), in assembled configuration, match perfectly.
